# EUROPÄISCHE PATENTSCHRIFT

(11) **EP 2 898 343 B1**
(45) Veröffentlichungstag und Bekanntmachung des Hinweises auf die Patenterteilung: **10.04.2019**
(21) Anmeldenummer: 13773593.2
(22) Anmeldetag: 09.09.2013
(51) Int. Cl.: G01S 7/40, G01S 7/497, G01S 7/52, G01S 15/93, G01S 17/93, G01S 13/86, G01S 13/93, G01S 13/52

(54) **VERFAHREN ZUR KALIBRIERUNG MEHRERER UMFELDSENSOREN IN EINEM FAHRZEUG**
METHOD FOR CALIBRATING A PLURALITY OF ENVIRONMENT SENSORS IN A VEHICLE
PROCÉDÉ D'ÉTALONNAGE DE PLUSIEURS DÉTECTEURS D'ENVIRONNEMENT EMBARQUÉS DANS UN VÉHICULE

(30) Priorität: 20.09.2012 DE 102012108862
(43) Veröffentlichungstag der Anmeldung: 29.07.2015
(73) Patentinhaber: Conti Temic microelectronic GmbH, 90411 Nürnberg (DE); Continental Teves AG & Co. OHG, 60488 Frankfurt am Main (DE)
(72) Erfinder: HEGEMANN, Stefan, 88239 Wangen (DE); KOMAR, Matthias, 60433 Frankfurt (DE); LÜKE, Stefan, 61191 Rosbach vor der Höhe (DE)
(86) Internationale Anmeldenummer: PCT/DE2013/200163
(87) Internationale Veröffentlichungsnummer: WO 2014/044272

(56) Entgegenhaltungen:
- DE-A1- 10 028 130
- DE-A1- 19 829 162
- DE-A1-102009 040 252
- DE-A1-102009 047 284

## Beschreibung

Die Erfindung -betrifft ein Verfahren zur Kalibrierung von mehreren Umfeldsensoren in einem Fahrzeug, die insbesondere für Fahrerassistenzsysteme genutzt werden.

Umfeldsensoren, die in Fahrzeugen zur Erfassung des Fahrzeugumfelds verwendet werden, sind z.B. Radar-, Lidar-, Kamera- und Ultraschallsensoren. Typischerweise erfolgt eine Bandende- bzw. EOL(End of Line)-Kalibrierung von Umfeldsensoren nach der Montage im Fahrzeug.
Bereits bekannt sind einzelne Umfeldsensoren, die eine automatische Kalibrierung zumindest für einzelne Parameter durchführen können.
WO 2007/121720 A1 zeigt ein Verfahren zur automatischen Gierwinkelkalibrierung einer Monokamera.
DE 102009009227 A1 zeigt Verfahren zur automatischen Justage eines Strahlsensors für ein Kraftfahrzeug, das selbstständig während des Fahrzeugbetriebs eine Sensorjustage durchführt, ohne dass eine weitere Überwachung der Selbstjustage notwendig ist.
WO 2011/063785 A1 zeigt ein Verfahren zur Rollwinkelschätzung und -kalibrierungsmöglichkeit mittels einer Monokamera in einem fahrenden Fahrzeug.

DE 10 2009 047284 A1 zeigt ein Verfahren zur Anpassung der Empfindlichkeit von Ultraschallsensoren. Die Einstellung der Sensoren erfolgt dann, wenn diese nicht gebraucht werden. Dies ist beispielsweise im Stand oder während der Fahrt bei höheren Geschwindigkeiten der Fall. Ersteres kann anhand eines Zustands der Feststellbremse oder daran, ob ein Gang eingelegt ist, festgestellt werden.

DE 10 2009 040252 A1, DE 198 29 162 A1 und DE 100 28 130 A1 zeigen Systeme aus Umfeldsensoren zur Erkennung einer Ampelstellung.

Um eine bestmögliche Erfassung des Fahrzeugumfelds zu gewährleisten werden Daten mehrerer Umfeldsensoren zunehmend fusioniert.
WO 2010/127650 A1 zeigt ein Verfahren zur Auswertung von Sensordaten eines Umfelderfassungssystems für ein Kraftfahrzeug. Es werden Detektionspunkte in ein zweidimensionales Belegungsgitter eingetragen, wobei der Zustand einer Gitterzelle belegt und damit "potentiell nicht überfahrbar" ist, und sonst unbelegt und damit "überfahrbar" ist und das Belegungsgitter im Wesentlichen ein Fahrzeugumfeld repräsentiert. Das Umfelderfassungssystem kann hierbei mehrere Umfeldsensoren umfassen, insbesondere einen Strahlsensor (Radar/Lidar/Ultraschall) und einen Kamerasensor (Monokamera/Stereokamera).

Der Erfindung liegt die Aufgabe zugrunde, ein Verfahren zur optimalen Kalibrierung von mehreren Umfeldsensoren in einem Fahrzeug anzugeben.

Die Aufgabe wird erfindungsgemäß durch die Merkmale des unabhängigen Anspruchs gelöst.

Vorteilhafte Weiterbildungen der Erfindung sind Gegenstand der Unteransprüche.

Ein erfindungsgemäßes Verfahren zur Kalibrierung von mehreren Umfeldsensoren in einem Fahrzeug sieht eine Detektion und Erkennung von Ampelsignalen aus den Daten mindestens eines Umfeldsensors vor. Die Kalibrierung mehrerer Umfeldsensoren wird durchgeführt, wenn erkannt wird, dass ein für das Fahrzeug maßgebliches Ampelsignal auf Rot gewechselt hat.

Der Erfindung liegt die Idee zu Grunde, dass wenn ein Fahrzeug an eine Ampel fährt oder bereits vor einer Ampel steht und diese gerade auf Rot schaltet, es sehr wahrscheinlich ist, dass das Auto für eine längere Zeitspanne (typischerweise mindestens 10 Sekunden) still stehen wird. Diese Zeit kann zu einer Kalibrierung, z.B. mittels automatischer Kalibrieralgorithmen, genutzt werden.

Erfindungsgemäß wird dafür Sorge getragen, dass die Kalibrierung erst durchgeführt wird, wenn das Fahrzeug steht. Der Stillstand des Fahrzeugs kann insbesondere aus Drehzahlsensordaten oder aus Daten mindestens eines Umfeldsensors ermittelt werden.
Während des Stillstands des Fahrzeugs sind aus Umfeldsensordaten bewegte Objekte leicht von stehenden Objekten zu unterscheiden, da die Umfeldsensoren gegenüber dem Fahrzeugumfeld unbewegt sind. Stehende Objekte weisen dann also keine Relativbewegung gegenüber den Umfeldsensoren auf.

Gemäß einer vorteilhaften Ausführungsform wird eine Kalibrierung durchgeführt anhand von Daten mindestens eines stehenden Objekts, das von mindestens zwei unterschiedlichen Umfeldsensoren detektiert wird, während das Fahrzeug steht. Die Kalibrierung der unterschiedlichen Umfeldsensoren erfolgt dabei derart, dass nach der Kalibrierung beider bzw. aller Umfeldsensoren von diesen Umfeldsensoren übereinstimmende Daten für das mindestens eine stehende Objekt erzeugt werden. Die übereinstimmenden Daten umfassen insbesondere die Position des Objekts, den Abstand zwischen dem eigenen Fahrzeug und dem Objekt Somit kann insbesondere anhand der Detektion von stehenden Objekten eine Multisensorkalibierung durchgeführt werden, bei der die im Fahrzeug vorhandenen Umfeldsensoren zumindest paarweise gegeneinander kalibriert werden.

Bevorzugt wird die Detektion und Erkennung von Ampelsignalen aus den Daten eines Kamerasensors durchgeführt.
Um Ampelsignale detektieren zu können, kann bevorzugt mit einem insbesondere farbauflösenden Fahrzeugkamerasensor mindestens ein Bild des Fahrzeugumfelds aufgenommen werden. Zur Ampelsignalerkennung kann in dem mindestens einen aufgenommenen Bild nach mindestens einem Signal einer Ampel gesucht werden und sofern ein potentielles Ampelsignal im Bild gefunden wird, kann dieses klassifiziert und verifiziert, also erkannt werden. Die Ampelsignalerkennung kann insbesondere von einer elektronischen Bildverarbeitung durchgeführt werden. Unter einem Ampelsignal wird die Gesamtheit der zu einem Zeitpunkt leuchtenden Ampelsignalfarben verstanden, also z.B. nur grün, aber auch gelb-rot. Sofern in einem Bild kein Ampelsignal gefunden wird, kann das Verfahren mit einem nachfolgend aufgenommenen Bild fortgesetzt werden.

Alternativ oder kumulativ kann die Detektion und Erkennung von Ampelsignalen aus den Daten einer Fahrzeugkommunikationseinheit (C2X) durchgeführt werden. Die Ampel kann dazu Daten bezüglich ihres aktuellen Ampelsignals bzw. Zustands an die Kommunikationseinheit des Fahrzeugs senden.

Vorteilhaft kann die Kalibrierung bereits vorbereitet werden, wenn erkannt wird, dass ein für das Fahrzeug maßgebliches Ampelsignal seine Grünphase beendet hat und in nächster Zeit auf Rot wechseln wird. Die kann insbesondere durch Erkennen eines auf gelb wechselnden Ampelsignals geschehen, denn dann ist als nächstes mit einem roten Ampelsignal zu rechnen.

In einer bevorzugten Ausführungsform arbeiten die Umfeldsensoren während der Kalibrierung in eingeschränktem Umfang. Dazu kann die Funktionalität der Umfeldsensoren heruntergefahren werden, so dass nur noch essenzielle Grundfunktionen wie z.B. Kollisionsschutzfunktionen, für die Kalibrierung notwendige Funktionen und die Erkennung eines Ampelsignalwechsels gewährleistet sind.

Vorteilhaft wird der volle Umfang der Funktionalität der Umfeldsensoren wiederhergestellt, wenn erkannt wird, dass ein für das Fahrzeug maßgebliches Ampelsignal seine Rotphase beendet hat. Dies kann insbesondere dadurch erkannt werden, dass Ampel auf gelb-rot wechselt.

Bevorzugt kann die Kalibrierung von den zwei monokularen Sensoren einer Stereokamera durchgeführt werden. Die beiden monokularen Sensoren einer Stereokamera weisen in aller Regel einen großen Überlappungsbereich auf.

In einer vorteilhaften Ausführungsform wird die Kalibrierung von den Kamerasensoren eines Rundumsichtsensorsystems durchgeführt. Zu den Rundumsichtsensorsystemen zählen Top-View, Surround-View bzw. 360° Sensorclustersysteme

In einer bevorzugten Ausführungsform wird die Kalibrierung von mindestens einem Umfeldsensor eines ersten Typs und mindestens einem Umfeldsensor eines zweiten Typs durchgeführt. Die Daten der mindestens zwei Umfeldsensoren vom ersten und vom zweiten Typ werden in ein gemeinsames Belegungsgitter (englisch Occupancy Grid) eingetragen. Bei dem Umfeldsensor des ersten Typs kann es sich beispielsweise um einen Strahlensensor und bei dem Umfeldsensor des zweiten Typs kann es sich beispielsweise um einen Kamerasensor handeln. Die Kalibrierung der unterschiedlichen Umfeldsensoren erfolgt dabei derart, dass nach der Kalibrierung beider Umfeldsensoren beide Umfeldsensoren ein (stehendes) Objekt im selben Gitterfeld detektieren.

Die Erfindung betrifft zudem eine Vorrichtung zur Kalibrierung von mehreren Umfeldsensoren in einem Fahrzeug. Die Vorrichtung umfasst Detektions- und Erkennungsmittel für Ampelsignale aus Daten mindestens eines Umfeldsensors. Kalibrierungsmittel zur Kalibrierung mehrerer Umfeldsensoren und ein Entscheidungsmittel sind vorgesehen. Das Entscheidungsmittel aktiviert die Kalibrierungsmittel, wenn die Detektions- und Erkennungsmittel erkennen, dass ein für das Fahrzeug maßgebliche Ampelsignal auf Rot gewechselt hat und wenn das Fahrzeug steht.

Die Erfindung bietet den Vorteil, dass eine definierte Zeitspanne für eine Kalibrierung mehrerer Umfeldsensoren ermittelt wird, während der die Umfeldsensoren insbesondere bei Stillstand des eigenen Fahrzeugs nicht oder nur sehr eingeschränkt zur Umfelddetektion benötigt werden. Eine Kalibrierung an stehenden Objekten erleichtert zudem den Kalibrierungsaufwand.

Die Erfindung wird im Folgenden anhand von Figuren und Ausführungsbeispielen erläutert.

Dabei zeigen:
Fig. 1 vier Signale einer Ampelschaltung und
Fig. 2 verschiedene Umfeldsensoren eines Fahrzeugs mit unterschiedlichen Erfassungsbereichen.

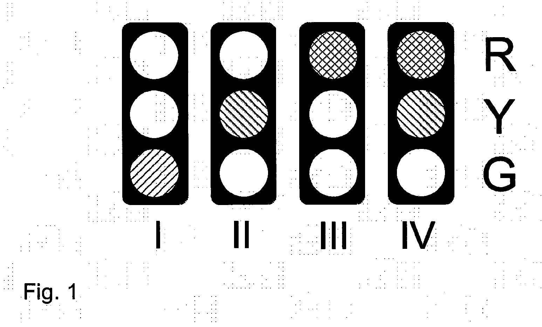

Figur 1 zeigt vier Signale bzw. Zustände einer Ampel. Bei Signal I leuchtet die untere, grüne Signalfarbe (G, diagonal aufsteigend schraffiert) und die Einfahrt ist freigegeben. Bei Signal II leuchtet die mittlere, gelbe Signalfarbe (Y, diagonal absteigend schraffiert) und der Fahrer soll auf das nächste Signal warten. Bei Signal III leuchtet die obere, rote Signalfarbe (R, diagonal gitterförmig schaffiert) und der Fahrer hat keine Einfahrerlaubnis. In manchen Ländern leuchten bei Signal IV die rote und die gelbe Signalfarbe (R, Y) gemeinsam, wodurch der Fahrer weiß, dass die Einfahrt gleich freigegeben wird.
Die Erkennung eines Wechsels von Signal I auf Signal II aus Daten eines Kamerasensors mittels einer Bildverarbeitung kann eine Kalibrierung mehrerer Umfeldsensoren vorbereitet werden. Bei der Erkennung eines Wechsels auf Signal III kann die Kalibrierung mehrerer Umfeldsensoren gestartet werden, insbesondere wenn sichergestellt ist, dass sich das eigene Fahrzeug im Stillstand befindet (z.B. aus Drehzahlsensordaten oder auch aus Kameradaten).

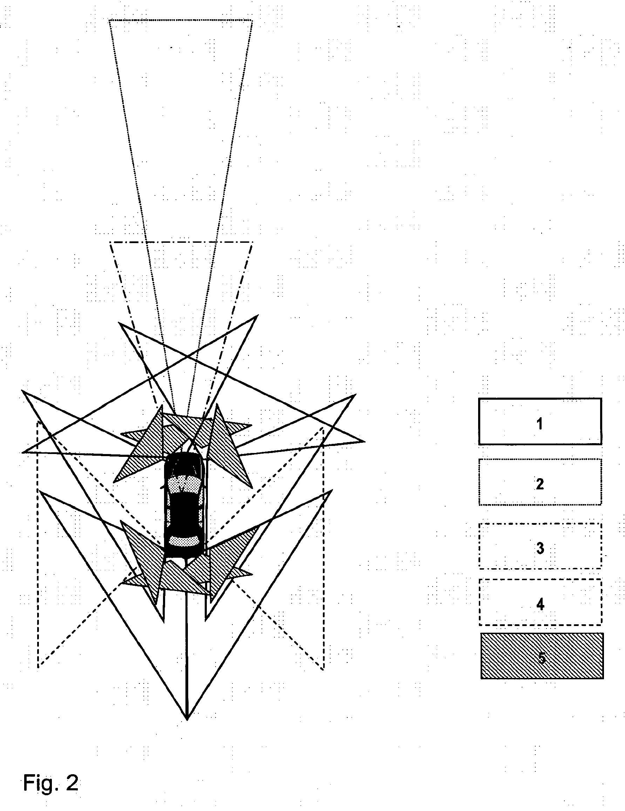

Figur 2 zeigt schematisch ein Fahrzeug mit mehreren Umfeldsensoren, die unterschiedlichen Erfassungsbereiche aufweisen (1-5).

Beim dargestellten Fahrzeug sind mehrere Kamerasensoren angeordnet, die durch ihre individuellen Erfassungsbereiche (1, durchgezogene Begrenzungslinien) die 360° Umgebung des Fahrzeugs bis zu mittleren Entfernungen abdecken, z.B. bis ca. 30 Meter. Eine derartige Kameraanordnung wird für Rundumsicht- oder auch Top View Systeme eingesetzt. Top View Systeme bieten typischerweise eine Darstellung des Fahrzeugs und seiner Umgebung aus einer Vogelperspektive.

Ein Fernbereichsradarsensor, typischerweise mit einer Frequenz von 79 GHz, hat einen Erfassungsbereich (2, gepunktete Begrenzungslinie), der bis weit vor dem Fahrzeug reicht (z.B. mehrere hundert Meter). Derartige Radarsensoren sind häufig Bestandteil eines ACC-Systems (Abstandsregeltempomaten).

Ein Stereokamerasensor überwacht den Raum vor dem Fahrzeug (3, strichpunktierte Begrenzungsline) bis zu mittleren Entfernungen und bietet räumliche Informationen zu Objekten in diesem Bereich.

Zwei Nahbereichsradarsensoren überwachen die Erfassungsbereiche (4, gestrichelte Begrenzungslinien) seitlich neben dem Fahrzeug, typischerweise mit einer Frequenz von 24 GHz. Sie dienen insbesondere der Totwinkelüberwachung (Blind Spot Detection).

Ultraschallsensoren überwachen Erfassungsbereiche (5, schraffierte Flächen), die unmittelbar vor den Stoßstangen des Fahrzeugs liegen. Derartige Ultraschallsensoren werden häufig zur Einparkunterstützung verwendet.

Wird nun mittels eines Kamerasensors erkannt, dass ein Ampelsignal auf rot wechselt, so kann bei Stillstand des eigenen Fahrzeugs mit der Multisensorkalibrierung begonnen werden. Hierzu können stehende Objekte identifiziert werden, die in einem überlappenden Erfassungsbereich von mindestens zwei Umfeldsensoren dekretiert werden. Beispielsweise kann ein ebenfalls vor der roten Ampel stehendes Fahrzeug im Erfassungsbereich (2) des Fernbereichsradars und im Erfassungsbereich (3) der Stereokamera liegen. Die Kalibrierung bewirkt, dass anschließend beide Umfeldsensoren übereinstimmende Daten (z.B. Position des Objekts, den Abstand zwischen dem eigenen Fahrzeug und dem Objekt, Ausdehnung des Objekts) für das stehende Fahrzeug erzeugt werden.

Auf dieselbe Weise können stehende Objekte, die sowohl im Erfassungsbereich (1) eines Rundumsichtkamerasensors als auch im Erfassungsbereich (5) eines Ultraschallsensors liegen zu deren wechselseitiger Kalibrierung verwendet werden.

Die Daten dieser beiden Umfeldsensoren können in ein gemeinsames Belegungsgitter eingetragen werden. Die Kalibrierung der beiden Umfeldsensoren erfolgt dabei derart, dass nach der Kalibrierung beide Umfeldsensoren das stehende Objekt im selben Gitterfeld detektieren.

### Bezugszeichenliste

- R: Rot
- Y: Gelb
- G: Grün
- I: Signal I (Einfahrt frei)
- II: Signal II (Nächstes Signal abwarten)
- III: Signal III (Einfahrt untersagt)
- IV: Signal IV (Einfahrt wird in Kürze freigegeben)
- 1: Erfassungsbereiche von Rundumsichtkamerasensoren
- 2: Erfassungsbereich eines Fernbereichsradarsensors
- 3: Erfassungsbereich eines Stereokamerasensors
- 4: Erfassungsbereiche von zwei Nahbereichsradarsensoren zur Überwachung der Totwinkelbereiche
- 5: Erfassungsbereiche von Ultraschallsensoren

## Patentansprüche

1. Verfahren zur Kalibrierung von mehreren Umfeldsensoren in einem Fahrzeug, wobei eine Detektion und Erkennung von Ampelsignalen aus den Daten mindestens eines Umfeldsensors durchgeführt wird, wobei eine Kalibrierung mehrerer Umfeldsensoren durchgeführt wird, wenn erkannt wird, dass ein für das Fahrzeug maßgebliches Ampelsignal auf Rot gewechselt hat, wobei die Kalibrierung erst durchgeführt wird, wenn das Fahrzeug steht.

2. Verfahren nach Anspruch 1,
wobei die Kalibrierung durchgeführt wird anhand von Daten mindestens eines stehenden Objekts, das von mindestens zwei unterschiedlichen Umfeldsensoren detektiert wird.

3. Verfahren nach einem der vorhergehenden Ansprüche, wobei die Detektion und Erkennung von Ampelsignalen aus den Daten eines Kamerasensors durchgeführt wird.

4. Verfahren nach einem der vorhergehenden Ansprüche, wobei die Detektion und Erkennung von Ampelsignalen aus den Daten einer Fahrzeugkommunikationseinheit durchgeführt wird.

5. Verfahren nach einem der vorhergehenden Ansprüche, wobei die Kalibrierung bereits vorbereitet wird, wenn erkannt wird, dass ein für das Fahrzeug maßgebliches Ampelsignal seine Grünphase (G) beendet hat und in nächster Zeit auf Rot (R) wechseln wird.

6. Verfahren nach einem der vorhergehenden Ansprüche, wobei die Umfeldsensoren während der Kalibrierung in eingeschränktem Umfang arbeiten.

7. Verfahren nach Anspruch 6, wobei der volle Umfang der Funktionalität der Umfeldsensoren wiederhergestellt wird, wenn erkannt wird, dass ein für das Fahrzeug maßgebliches Ampelsignal seine Rotphase (R) beendet hat.

8. Verfahren nach einem der vorhergehenden Ansprüche, wobei die Kalibrierung von den zwei monokularen Sensoren einer Stereokamera durchgeführt wird.

9. Verfahren nach einem der vorhergehenden Ansprüche, wobei die Kalibrierung von den Kamerasensoren eines Rundumsichtsensorsystems durchgeführt wird.

10. Verfahren nach einem der Ansprüche 1 bis 7, wobei die Kalibrierung von mindestens einem Umfeldsensor eines ersten Typs und mindestens einem Umfeldsensor eines zweiten Typs durchgeführt wird, wobei die Daten der mindestens zwei Umfeldsensoren vom ersten und vom zweiten Typ in ein gemeinsames Belegungsgitterfeld eingetragen werden.

11. Vorrichtung zur Kalibrierung von mehreren Umfeldsensoren in einem Fahrzeug, wobei Kalibrierungsmittel zur Kalibrierung mehrerer Umfeldsensoren vorgesehen sind, **dadurch gekennzeichnet, dass** Detektions- und Erkennungsmittel für Ampelsignale aus Daten mindestens eines Umfeldsensors und ein Entscheidungsmittel vorgesehen sind, das die Kalibrierungsmittel aktiviert, wenn die Detektions- und Erkennungsmittel erkennen, dass ein für das Fahrzeug maßgebliche Ampelsignal auf Rot (R) gewechselt hat und wenn das Fahrzeug steht.

## Claims

1. A method for calibrating a plurality of environment sensors in a vehicle, wherein a detection and identification of traffic light signals from the data of at least one environment sensor is performed, wherein a calibration of a plurality of environment sensors is performed upon identifying that a traffic light signal relevant for the vehicle has turned red, wherein the calibration is not performed until the vehicle is stationary.

2. The method according to Claim 1, wherein the calibration is performed based on data regarding at least one stationary object which is detected by at least two different environment sensors.

3. The method according to any one of the preceding claims, wherein traffic light signals are detected and identified from the data of a camera sensor.

4. The method according to any one of the preceding claims, wherein traffic light signals are detected and identified from the data of a vehicle communication unit.

5. The method according to any one of the preceding claims, wherein the calibration is already prepared upon identifying that a traffic light signal relevant for the vehicle has finished its green phase (G) and will turn red (R) in the near future.

6. The method according to any one of the preceding claims, wherein the environment sensors are functional to a limited extent during the calibration.

7. The method according to Claim 6, wherein the full extent of the functionality of the environment sensors is restored upon identifying that a traffic light signal relevant for the vehicle has finished its red phase (R).

8. The method according to any one of the preceding claims, wherein the calibration is performed by the two monocular sensors of a stereo camera.

9. The method according to any one of the preceding claims, wherein the calibration is performed by the camera sensors of a panoramic view sensor system.

10. The method according to any one of Claims 1 to 7, wherein the calibration is performed by at least one environment sensor of a first type and at least one environment sensor of a second type, wherein the data of the at least two environment sensors of the first and second types are entered into a common occupancy grid.

11. A device for calibrating a plurality of environment sensors in a vehicle, wherein calibration means for calibrating a plurality of environment sensors are provided, **characterized in that** detection and identification means for traffic light signals from data of at least one environment sensor are provided and a decision means is provided, which activates the calibration means when the detection and identification means identify that a traffic light signal relevant for the vehicle has turned red (R) and when the vehicle is stationary.

## Revendications

1. Procédé d'étalonnage de plusieurs détecteurs d'environnement dans un véhicule, où une détection et une reconnaissance de feux de signalisation sont effectuées à partir des données d'au moins un détecteur d'environnement, où un étalonnage de plusieurs détecteurs d'environnement est effectué s'il est reconnu qu'un feu de signalisation déterminant pour le véhicule est passé au rouge, l'étalonnage n'étant effectué que si le véhicule est à l'arrêt.

2. Procédé selon la revendication 1, où l'étalonnage est effectué sur la base de données d'au moins un objet stationnaire détecté par au moins deux détecteurs d'environnement différents.

3. Procédé selon l'une des revendications précédentes, où la détection et la reconnaissance de feux de signalisation sont effectuées à partir des données d'un capteur de caméra.

4. Procédé selon l'une des revendications précédentes, où la détection et la reconnaissance de feux de signalisation sont effectuées à partir des données d'une unité de communication de véhicule.

5. Procédé selon l'une des revendications précédentes, où l'étalonnage est déjà préparé quand il est reconnu qu'un feu de signalisation déterminant pour le véhicule a cessé d'être au vert (G) et va prochainement passer au rouge (R).

6. Procédé selon l'une des revendications précédentes, où les détecteurs d'environnement fonctionnent de manière limitée pendant l'étalonnage.

7. Procédé selon la revendication 6, où toutes les fonctionnalités des détecteurs d'environnement sont rétablies quand il est reconnu qu'un feu de signalisation déterminant pour le véhicule a cessé d'être au rouge (R).

8. Procédé selon l'une des revendications précédentes, où l'étalonnage est effectué par les deux capteurs monoculaires d'une caméra stéréoscopique.

9. Procédé selon l'une des revendications précédentes, où l'étalonnage est effectué par les capteurs de caméra d'un système de capteurs panoramique.

10. Procédé selon l'une des revendications 1 à 7, où l'étalonnage est effectué par au moins un détecteur d'environnement d'un premier type et au moins un capteur d'environnement d'un deuxième type, les données des au moins deux détecteurs d'environnement du premier et du deuxième type étant enregistrées dans une grille d'affectation commune.

11. Dispositif pour l'étalonnage de plusieurs détecteurs d'environnement dans un véhicule, où des moyens d'étalonnage sont prévus pour l'étalonnage de plusieurs détecteurs d'environnement, **caractérisé en ce que** sont prévus des moyens de détection et de reconnaissance pour des feux de signalisation à partir de données d'au moins un détecteur d'environnement, et un moyen de décision activant les moyens d'étalonnage, si les moyens de détection et de reconnaissance reconnaissent qu'un feu de signalisation déterminant pour le véhicule est passé au rouge (R) et si le véhicule est à l'arrêt.
